# EUROPEAN PATENT APPLICATION

(11) **EP 1 317 877 A1**
(43) Date of publication of application: **11.06.2003**
(21) Application number: 02257685.4
(22) Date of filing: 06.11.2002
(51) Int. Cl.: A01B 15/14, A01B 15/12

(54) **Reversible plough**

(30) Priority: 09.11.2001 GB 0126936
(71) Applicant: Kverneland ASA, 4344 Kvernaland (NO)
(72) Inventor: Skjaeveland, Magne, 4353 Klepp stasjon (NO)
(74) Representative: Orr, William McLean

(57) **Abstract**

A fully mounted reversible plough (10) which comprises: a headstock (11); a plough frame (12) having a plurality of pairs of reversible plough bodies (13) spaced apart along its length; and, means (14) mounting the plough frame (12) on the headstock (11) for rotational movement between two ploughing positions corresponding to left side ploughing and right side ploughing by the plough bodies (13) in order to reverse the plough bodies: in which: (a) the plough frame (12) is a two part frame having a short forward frame part (17) which is mounted on the headstock (11), and a long rear frame part (18) which is pivotally connected to the forward part (17); (b) at least a foremost pair of plough bodies (13a) is mounted on the forward part (17), and further pairs of plough bodies (13) are mounted on the rear part (18); (c) the forward part (17) is pivotally adjustable (19) with respect to the headstock (11) about an upright axis in order to set any required plough width W between all of the adjacent pairs of plough bodies (13, 13a); (d) the long rear frame part (18) is angularly adjustable about a hinge axis (20) relative to the forward part (17) between a ploughing position in which the rear part (18) forms a prolongation of the forward part (17) (Figure 1) and a rearwardly inclined turnover position (Figure 2) in which the overall width of the plough is reduced so that the forward and rear frame parts (17, 18) of the frame (12) can rotate as a unit relative to the headstock (11) in order to reverse the plough bodies (13, 13a); and (e) an adjustment mechanism is mounted on the forward and rear frame parts (17, 18) and is connected to each pair of plough bodies (13), said mechanism being operative in stepless manner to alter the ploughing width W between adjacent pairs of plough bodies upon pivotal adjustment of the forward part 18 relative to the headstock (11).

## Description

This invention relates to a reversible plough which comprises a plough frame, and a plurality of pairs of plough bodies spaced apart along the length of the plough frame.

As is well known, a reversible plough usually has a headstock, and a transversely extending plough frame or beam which is rotatably mounted on the headstock and which has a longitudinal axis which extends at an oblique angle relative to the ploughing direction. The plough frame can take-up either one of two ploughing positions, by rotating through approximately 180° relative to the headstock, in order to reverse the plough bodies between left side ploughing and right side ploughing during consecutive ploughing towards and away from the usual "headland" at one end of a field being ploughed.

Reversible ploughs are of the fully mounted and the semi-mounted type, as will be well known to those of ordinary skill in the art, and during plough body reversal or socalled "turnover", the plough frame and the plough bodies mounted thereon have to be rotated bodily as a unit through 180°, and the entire assembly therefore has substantial inertia and requires substantial power input from the tractor to which the reversible plough is coupled.

Reversible ploughs can be provided with a small, or large number of pairs of plough bodies, depending upon customer requirements, and obviously the greater the number required, the greater will be the length of the plough frame.

However, there are self-evident design constraints which limit the number of plough bodies which may be provided on a single plough frame or beam, bearing in mind three important factors. Thus, increasing the number of plough bodies will increase the lateral spacing of the outermost pair of plough bodies from the rotational axis of the headstock, and which gives rise to three problems.

First of all, the increased lateral spacing from the rotational axis increases considerably the overall inertia of the plough, and therefore also the power demand from the tractor, and which can only be met by using a large and high horse power tractor. Secondly, in rotating the plough frame about the rotational axis, it is necessary to ensure that there is no obstruction to rotation of the frame by any parts of the frame e.g. plough bodies coming into contact with the ground.

Thirdly, increasing the overall length of the plough frame moves the centre of gravity of the plough rearwardly with respect to the tractor, and this also will require a greater lifting force, also derived from the tractor.

The three problems referred to above impose practical limitations on the length of a single plough frame, and which will be further enhanced, when, as is often the case, a packer assembly also is mounted on the plough frame to form an integrated plough / packer apparatus which increases both the overall inertia, and the overall width when compared with a reversible plough only.

The present invention has therefore been developed primarily with a view to increase the plough body carrying capacity of a plough frame of a particular length, and thereby avoiding problems which otherwise might be encountered by increasing the length of the plough frame (to accommodate more pairs of plough bodies).

According to the invention there is provided a fully mounted reversible plough as defined in claim 1.

The forward end of the plough frame can be rotatably mounted on the headstock by any suitable mounting arrangement, whereby the entire plough can rotate as a unit about an axis extending generally parallel to the ground surface being ploughed, and which axis also extends generally in the ploughing direction.

Any suitable actuator, preferably power operable, may be provided in order to adjust the angle of the plough frame relative to the ploughing direction, and thereby set the ploughing width between adjacent pairs of plough bodies. Thus, angular adjustment of the front part of the frame can set the ploughing width of all of the plough bodies, when the rear part of the frame is in its ploughing position (forming a prolongation of the forward part). A hydraulic ram is one example of an actuator which may be used.

An additional actuator, also preferably power operable, may be provided in order to adjust the angle of inclination of the rear frame part relative to the front frame part, and which also may comprise an hydraulic ram.

Therefore, in a preferred embodiment, effectively a hinge connection is provided between the front and rear frame parts, and which will define an upright pivot axis about which relative angular adjustment can take place between the front and rear frame parts.

By the invention, it is therefore possible to mount adjacent pairs of plough bodies close together along the length of any particular plough frame, since the overall frame can be laterally adjusted to a transversely extending position which is at a greater angle to the ploughing direction compared with existing designs, and thereby achieve any required ploughing width. However, although this potentially increases the rotational inertia of the frame (for the purposes of plough body reversal), the facility to adjust the angle of inclination of the long rear frame part relative to the front frame part, to take-up the turnover position, reduces the overall width of the plough and facilitates turnover of the pairs of plough bodies.

The ability to mount the plough bodies close to each other (despite possible problems of straw and soil build-up in the space between adjacent bodies) is achieved by special design and arrangement of the plough bodies, as disclosed in more detail in our application PCT/N093/00036.

The plough frame therefore can have up to 8 or more pairs of plough bodies mounted thereon.

The invention is particularly suitable for use with a fully reversible plough.

If required, the mounting arrangement which mounts the plough frame on the headstock may also have a packer unit mounted thereon, to provide an integrated assembly of reversible plough and packer.

To facilitate the common adjustment of plough width between all of the adjacent pairs of plough bodies, preferably each pair of bodies is mounted on a corresponding mounting point on the plough frame and is connected to a common actuator mechanism which forms parallelogram type linkage with each plough body pair. The adjustment is therefore a steplessly adjustable arrangement.

A preferred embodiment of reversible plough according to the invention will now be described in detail, by way of example only, with reference to the accompanying drawings, in which:
Figure 1 is a plan view of an integrated assembly of a fully mounted reversible plough and packer, with the plough being shown occupying a normal ploughing position;
Figure 2 is a plan view, but showing adjustment of the plough frame to a position of reduced width, and suitable for "turnover" in order to reverse the plough bodies; and
Figures 3 to 5 illustrate a stepless adjustment mechanism in different positions of adjustment, in order to adjust the ploughing width between adjacent bodies.

Referring now to the drawings, there is shown a preferred embodiment of the invention in the form of a fully mounted reversible plough and packer unit forming an integrated combination, and this is a long plough showing 8 pairs of plough bodies mounted thereon. The integrated apparatus is designated generally by reference 10, and comprises a usual headstock 11 by which the apparatus 10 is coupled to the rear of a tractor, and a plough frame designated generally by reference 12 having a plurality of pairs of reversible plough bodies 13 spaced apart along its length. Means 14 is provided to mount the plough frame 12 on the headstock 11 for rotational movement between two ploughing positions corresponding to left side ploughing and right side ploughing by the plough bodies, in order to reverse the plough bodies. The mounting means 14 can take any suitable one of existing mounting arrangements. Also, a packer unit 15 is mounted on the mounting means 14 via a laterally adjustable mounting beam 16, thereby to provide an integrated combination of reversible plough and packer.

The plough frame 12 is a two part frame having a short forward part 17 which is mounted on the headstock 11, and a long rear part 18 which is pivotally connected to the forward part 17. At least a foremost pair 13a is mounted on the forward part 17, and further pairs of plough bodies 13 are mounted on the rear part 18. In the illustrated embodiment, three pairs of plough bodies are actually mounted on the forward frame part 17.

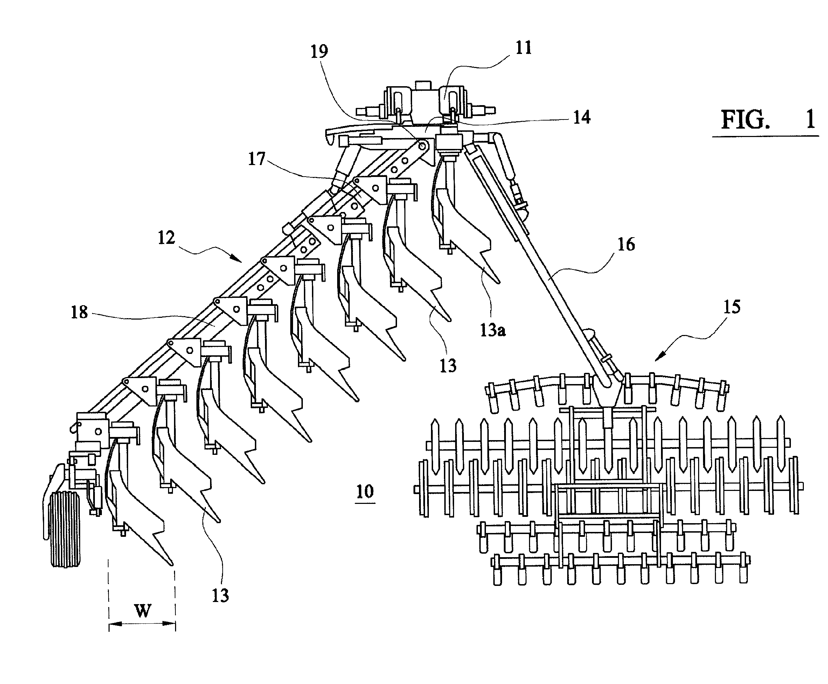

With regard to the manner of mounting the forward part 17 on the headstock 11, not only is this capable of allowing the entire frame 12 to be rotated bodily about a longitudinal axis extending generally parallel to the ground surface, and also extending in the ploughing direction, for the purposes of plough body reversal; in addition the forward part 17 is also pivotally adjustable for the purposes of adjusting the plough width. Thus, forward part 17 is mounted via a vertical or generally upright pivot 19 relative to the headstock 11, in order to adjust the overall angle of the two part plough frame 12 relative to the ploughing direction, for the purposes of setting the ploughing width, shown by reference W in Figure 1.

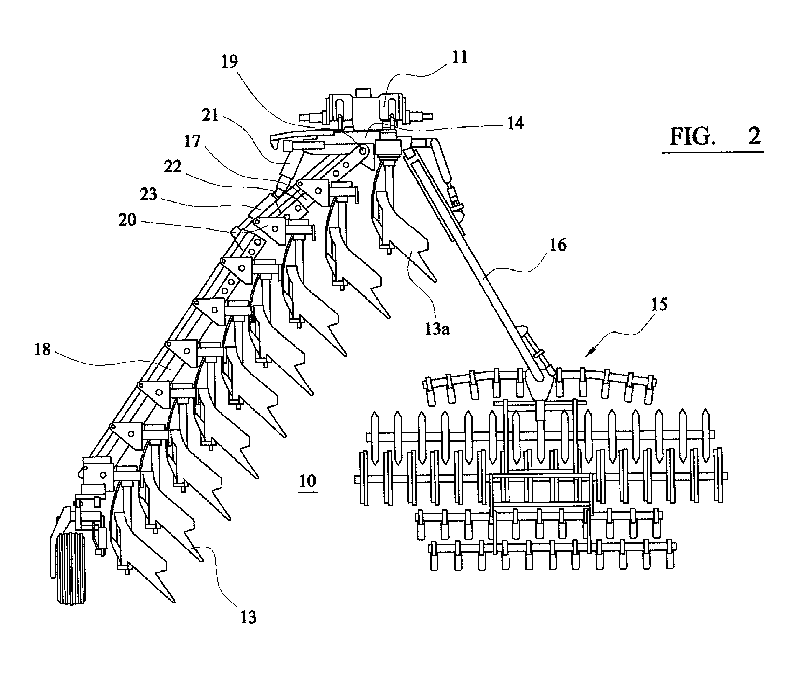

The long rear frame part 18 is angularly adjustable relative to the forward part 17 about a vertical or upright hinge axis 20, so that the rear frame part 18 can be adjusted relative to the forward frame part 17 between a ploughing position shown in Figure 1, and a "turnover" position shown in Figure 2. As shown in Figure 1, the rear frame part 18 forms a prolongation of the forward part 17, in order to provide a ploughing position, and the angle of inclination of the two part frame 12, relative to the ploughing direction, is at a greater angle than with existing designs of plough frame, and therefore this allows adjacent pairs of plough bodies 13 to be mounted closer to each other, when measured along the length of the two part frame, and still provide any required ploughing width. This has the advantage of reducing the rearward spacing of the overall centre of gravity of the plough, and thereby reducing the lifting action which may be required, and which is derived from the power of the tractor, in order to lift the plough bodies out of the ground as the plough approaches the usual "headland".

However, although the overall width of the long plough frame shown in ploughing position of Figure 1 is greater than a comparable plough of an existing design, this does not give any difficulties with regard to "turnover", as will be described below.

In particular, when it is required to reverse the plough bodies, the long rear frame part 18 is angularly adjusted to a rearwardly inclined "turnover" position, as shown in Figure 2, in which the overall width of the plough is reduced so that the forward and rear parts 17, 18 of the frame can rotate as a unit relative to the headstock 1 in order to reverse the plough bodies.

After the plough frame has taken-up the alternative ploughing position, the rear frame part 18 can then be forwardly adjusted so as to take-up the ploughing position again, in which it forms a prolongation of the front frame part 17.

Any suitable actuator, preferably power operated, may be provided in order to adjust the angle of the composite frame 12 relative to the ploughing direction, and thereby set the ploughing width W between adjacent pairs of plough bodies. In the illustrated arrangement, a hydraulic ram 21 is provided, which reacts between the mounting means 14 and a suitable pivot connection 22 to the rear end of the front frame part 17.

An additional actuator, also preferably power operated, is provided in order to adjust the angle of inclination of the rear frame part 18 relative to the front frame part 17, and this also preferably comprises a hydraulic ram 23.

Therefore, effectively a hinge connection is provided between the front and rear frame parts 17, 18, and which defines an upright pivot axis about which relative angular adjustment can take place, in order to adjust the two parts of the frame between the ploughing position and the turnover position.

In the disclosed embodiment, it is possible to mount adjacent pairs of plough bodies close together along the length of the plough frame, compared with existing designs, despite possible problems of straw and soil build-up in the space between adjacent bodies. This is achieved by design and arrangement of the plough bodies as disclosed in PCT/NO93/00036. Also, the overall frame can be laterally adjusted to a transversely extending ploughing position which is at a greater angle to the ploughing direction compared with existing designs, and therefore achieves any required ploughing width. However, the facility to adjust the angle of inclination of the rear frame part 18 relative to the front part 17 reduces the overall width of the plough and facilitates turnover of the plough bodies.

In the illustrated embodiment, 8 pairs of plough bodies are shown, but more or less pairs of plough bodies may be provided if required.

To facilitate the common adjustment of plough width between adjacent pairs of plough bodies, each pair of bodies is mounted on a corresponding mounting point on the plough frame and is connected to a common actuator mechanism which forms parallelogram linkages with each plough body pair. The adjustment which is achieved is a steplessly adjustable arrangement.

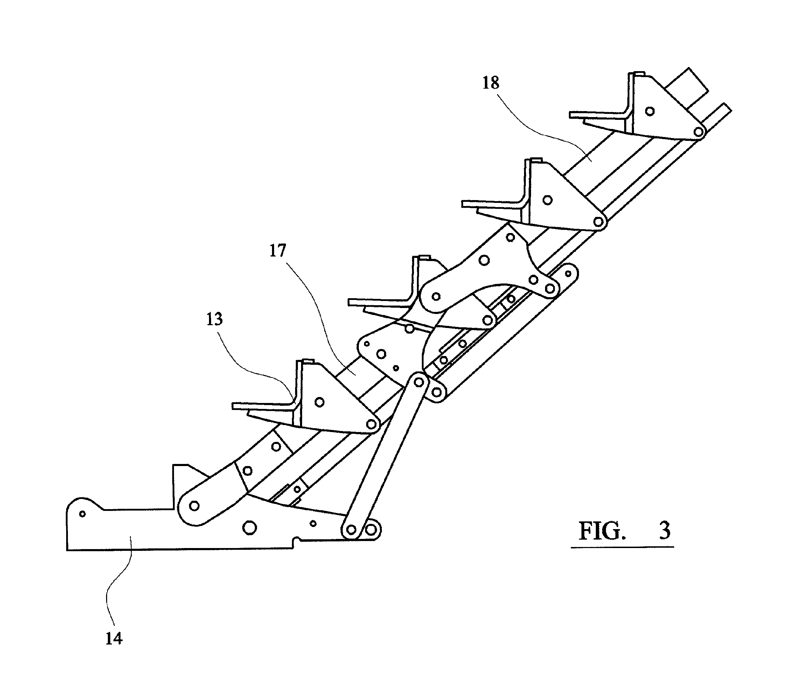

A common stepless adjustment mechanism is shown in Figures 3 to 5 of the drawings, and which is mounted on the forward and rear frame parts 17, 18 and is connected to each pair of plough bodies 13. The mechanism is operative in stepless manner to alter the ploughing width between adjacent pairs of plough bodies upon pivotal adjustment of the forward part 18 relative to the headstock 11.

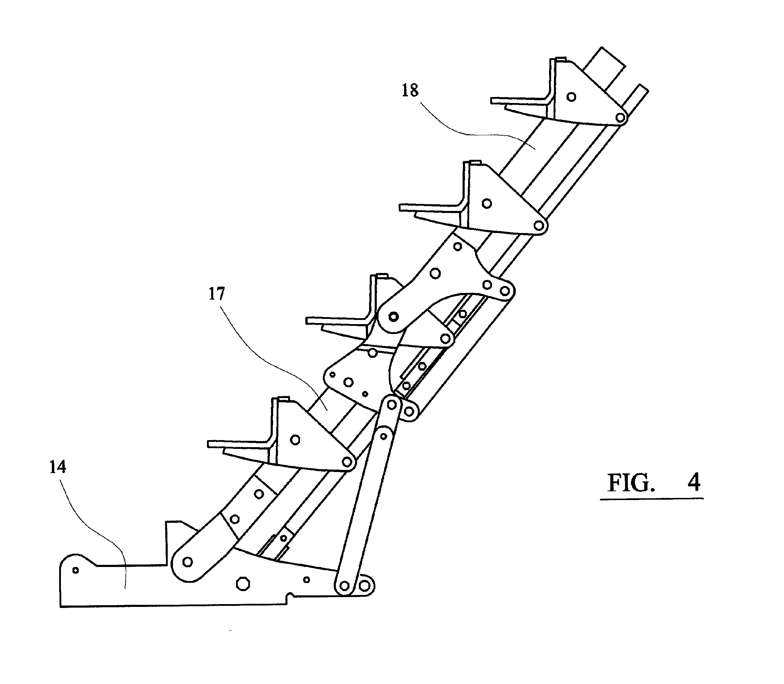

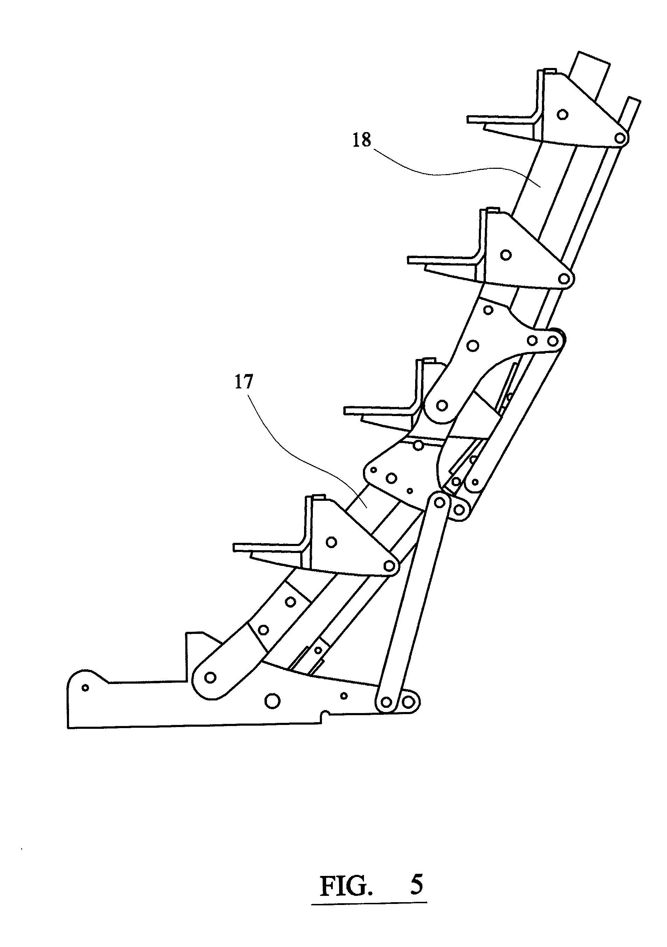

Figures 3 and 4 show adjustment between two different ploughing positions, in order to vary the ploughing width, whereas Figure 5 illustrates rearward inclination of the rear part 18 of the plough frame relative to the forward part 17, for the purposes of "turnover" of the plough. The mechanism operates in order to adjust all of the plough bodies simultaneously, upon adjustment of the forward frame part 17 relative to the headstock 11, by provision of parallelogram linkages and common pivot points.

Finally, the plough bodies may be provided with a landside knife, as disclosed in more detail in our pending UK patent application No. 0119901.7.

## Claims

1. A fully mounted reversible plough (10) which comprises:
a headstock (11);
a plough frame (12) having a plurality of pairs of reversible plough bodies (13) spaced apart along its length; and,
means (14) mounting the plough frame (12) on the headstock (11) for rotational movement between two ploughing positions corresponding to left side ploughing and right side ploughing by the plough bodies (13) in order to reverse the plough bodies:
in which:
(a) the plough frame (12) is a two part frame having a short forward frame part (17) which is mounted on the headstock (11), and a long rear frame part (18) which is pivotally connected to the forward part (17);
(b) at least a foremost pair of plough bodies (13a) is mounted on the forward part (17), and further pairs of plough bodies (13) are mounted on the rear part (18);
(c) the forward part (17) is pivotally adjustable (19) with respect to the headstock (11) about an upright axis in order to set any required plough width W between all of the adjacent pairs of plough bodies (13, 13a);
(d) the long rear frame part (18) is angularly adjustable about a hinge axis (20) relative to the forward part (17) between a ploughing position in which the rear part (18) forms a prolongation of the forward part (17) (Figure 1) and a rearwardly inclined turnover position (Figure 2) in which the overall width of the plough is reduced so that the forward and rear frame parts (17, 18) of the frame (12) can rotate as a unit relative to the headstock (11) in order to reverse the plough bodies (13, 13a); and
(e) an adjustment mechanism is mounted on the forward and rear frame parts (17, 18) and is connected to each pair of plough bodies (13), said mechanism being operative in stepless manner to alter the ploughing width W between adjacent pairs of plough bodies upon pivotal adjustment of the forward part 18 relative to the headstock (11).

2. A reversible plough according to claim 1, **characterised in that** the forward end of the plough frame (12) is rotatably mounted on the headstock (11) via a mounting arrangement (14) which allows the entire plough to rotate as a unit about an axis extending generally parallel to the ground surface, and such axis also extending in the ploughing direction.

3. A reversible plough according to claim 1 or 2, including an actuator (21) acting between the mounting arrangement (14) and the forward frame part (17), and operative to adjust the front parts (17) of the frame laterally relative to the ploughing direction in order to set the ploughing width W of all of the plough bodies (13, 13a).

4. A reversible plough according to claim 3, including an additional actuator (23) which is operative to adjust the angle of inclination of the rear frame part (18) relative to the front frame part (17).

5. A reversible plough according to claim 4, in which the additional actuator (23) is a hydraulic ram.

6. A reversible plough according to any one of the preceding claims, in which a hinge connection is provided between the front and rear frame parts (17, 18).

7. A reversible plough according to any one of the preceding claims, in which a packer (15) is also mounted on the mounting arrangement (14), to form an integrated combination of reversible plough and packer.
